# FASCICULE DE BREVET EUROPEEN

(11) **EP 3 971 550 B1**
(45) Date de publication et mention de la délivrance du brevet: **23.08.2023**
(21) Numéro de dépôt: 21197882.0
(22) Date de dépôt: 21.09.2021
(51) Int. Cl.: G01N 15/02, G01N 15/14, G01N 21/47, G01N 21/53

(54) **DÉTECTEUR OPTIQUE DE PARTICULES ET PROCÉDÉ DE FABRICATION**
OPTISCHER TEILCHENDETEKTOR UND HERSTELLUNGSVERFAHREN
OPTICAL PARTICLE SENSOR AND METHOD OF MANUFACTURING SAME

(30) Priorité: 21.09.2020 FR 2009545
(43) Date de publication de la demande: 23.03.2022
(73) Titulaire: Commissariat à l'Energie Atomique et aux Energies Alternatives, 75015 Paris (FR); Centre National de la Recherche Scientifique, 75016 Paris (FR); CPE Lyon, 69100 Villeurbanne (FR); Ecole Centrale de Lyon, 69130 Ecully (FR); Institut National des Sciences Appliquées de Lyon, 69100 Villeurbanne (FR); Université Claude Bernard Lyon 1, 69100 Villeurbanne (FR)
(72) Inventeur: BOUTAMI, Salim, 38054 GRENOBLE Cedex 09 (FR); FOURNIER, Maryse, 38054 GRENOBLE Cedex 09 (FR); JOBERT, Gabriel, 38054 GRENOBLE Cedex 09 (FR); SEASSAL, Christian, 69004 LYON (FR); JAMOIS, Cécile, 69300 CALUIRE (FR)
(74) Mandataire: Hautier IP

(56) Documents cités:
- EP-A1- 3 598 102
- EP-A1- 3 671 179
- VON BIBRA M L ET AL: "Mode profile modification of H^+ ion beam irradiated waveguides using UV processing", JOURNAL OF NON-CRYSTALLINE SOLIDS, NORTH-HOLLAND PHYSICS PUBLISHING. AMSTERDAM, NL, vol. 239, no. 1-3, 19 novembre 1998 (1998-11-19), pages 121-125, XP004161136, ISSN: 0022-3093, DOI: 10.1016/S0022-3093(98)00727-3

## Description

### DOMAINE TECHNIQUE

La présente invention concerne le domaine de la détection optique de particules en général et plus particulièrement de particules de taille micrométrique, voire nanométrique. Elle trouve par exemple pour application le comptage optique de particules.

Des domaines d'application particulièrement avantageux, mais non limitatifs sont par exemple : le contrôle de la qualité de l'air, la détection d'espèces microbiologiques, la détection de poudre d'explosifs, la détection des incendies, les systèmes d'alarme peu sensibles aux faux positifs.

### ETAT DE LA TECHNIQUE

Les particules sont des objets microscopiques solides, liquides ou solides mouillés en suspension dans l'air. Leurs tailles varient de quelques dizaines de nanomètres à quelques dizaines de micromètres. Ces particules proviennent de sources variées telles que des incendies de forêts, des sites de construction, des sites industriels, des véhicules motorisés etc.

Lorsque la concentration de ces particules dépasse un certain seuil, elles ont un impact néfaste sur l'environnement et/ou la santé. Ainsi, des états ont fixé des seuils de concentration maximale. Par exemple, l'Union Européenne permet des concentrations maximales de 50 µg/m3 pour les particules de taille comprise entre 10 µm et 2.5 µm et de 25 µg/m3 pour les particules de taille inférieure à 2.5 µm.

Il est donc nécessaire de détecter avec précision la présence et la concentration de ces particules par gamme de taille.

Différentes méthodes de détection de particules existent, telles que les méthodes de détection par gravimétrie, par ionisation, par atténuation bêta, les méthodes de détection par mesure de mobilité aérodynamique ou de mobilité électrique, les méthodes de détection optiques.

Ces dernières sont avantageusement plus simples à mettre en oeuvre, et plus répandues.

Les détecteurs optiques de particules sont généralement basés sur la détection d'une interaction entre une lumière et des particules. En pratique, les particules à détecter passent dans une zone éclairée par une source de lumière, typiquement un canal.

Si des particules sont présentes dans la zone éclairée, celles-ci vont absorber une partie de la lumière qui provient de la source et vont diffuser une autre partie de cette lumière hors de la direction principale de propagation, selon le phénomène de diffusion.

Une première méthode de détection optique, dite mesure d'obscuration, consiste donc à mesurer l'absorption de la lumière à travers un nuage de particules ou une accumulation de particules. Cette mesure permet de déterminer la concentration des particules à l'aide de la loi de Beer-Lambert si on connait a priori la composition du nuage de particules.

Une deuxième méthode consiste à analyser la lumière diffusée hors de l'axe optique. L'analyse angulaire de la lumière diffusée se fait à partir de l'enregistrement d'un diagramme de diffusion. Elle permet de déterminer la forme, la taille, l'indice optique et la concentration des particules. Par exemple, la taille, l'indice de réfraction et la concentration de particules peuvent être déterminées à partir des théories de diffusion de la lumière, par exemple la théorie de Mie (Réf : Bohren et Huffmann, Absorption and scattering of light by small particles, Ed. Wiley and Sons, 1983).

Les compteurs optiques de particules fonctionnent sur les principes cités ci-dessus. Ils ont pour particularité que la zone éclairée est limitée géométriquement, par exemple par focalisation d'une source laser et/ou par un canal micro-fluidique et/ou par un système de lentilles aérodynamiques. Cette limitation géométrique permet de détecter des particules uniques plutôt que des nuages.

Une solution permettant de réaliser de tels compteurs ou détecteurs optiques de particules en améliorant leur robustesse et en réduisant leur coût consiste à intégrer ces compteurs/détecteurs dans des puces miniaturisées à l'aide des technologies de la microélectronique et de la photonique.

Le document FR3062209 décrit un tel détecteur intégré. Ce détecteur comprend notamment un assemblage discret de photodétecteurs formant une rétine ainsi que des surfaces réfléchissantes pour projeter sur la rétine l'image de la lumière diffusée par la ou les particules. Un diagramme de diffusion caractéristique de la particule est ainsi obtenu.

En pratique, il s'avère que la sensibilité de ce type de détecteur est limitée et que des particules, notamment celles de petites tailles, peuvent ne pas être détectées.

Le document EP3671179A1 divulgue une autre configuration de détecteur comprenant une pluralité d'entrées optiques disposées radialement autour du canal. L'une de ces entrées, disposée en face de la source peut collecter des rayons lumineux non diffusés. Ces derniers peuvent être réinjectés dans le canal. Ce document, qui porte sur l'analyse angulaire, ne fournit pas de solution pratique pour cette possibilité. Par ailleurs, cette solution n'est pas optimale pour améliorer la sensibilité du détecteur de particules.

Il existe donc un besoin consistant à améliorer la sensibilité des détecteurs de particules, et en particulier pour la détection des particules de petite taille. Une détection fiable de ces petites particules est un enjeu important puisque celles-ci sont généralement les plus dangereuses pour la santé.

Un objet de la présente invention est de proposer un tel détecteur de particules permettant d'améliorer la détection de petites particules.

Un autre objet de la présente invention est un procédé de fabrication d'un tel détecteur de particules.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre ces objectifs, la présente invention propose un détecteur optique de particules comprenant :
au moins un canal destiné à accueillir un fluide transportant au moins une particule, et à être traversé par des rayons lumineux de sorte que lesdits rayons lumineux soient en partie diffusés par l'au moins une particule,
une pluralité de photodétecteurs aptes à recevoir lesdits rayons lumineux diffusés,

Avantageusement, le détecteur comprend au moins un guide optique comprenant au moins une première partie et une deuxième partie séparées l'une de l'autre par le canal, la première partie du guide présentant une première entrée et une première sortie débouchant sur le canal et la deuxième partie du guide présentant une deuxième entrée et une deuxième sortie débouchant sur le canal, lesdites première et deuxième parties étant agencées de manière à ce que la première entrée soit en regard de la deuxième sortie, et la deuxième entrée soit en regard de la première sortie. Le guide optique est configuré pour :
collecter, au niveau d'au moins une entrée du guide prise parmi les première et deuxième entrées, des rayons lumineux non diffusés par l'au moins une particule et ayant traversés le canal, et pour
réinjecter dans le canal, par au moins une sortie du guide prise parmi les première et deuxième sorties, lesdits rayons lumineux non diffusés.

Ainsi, les rayons lumineux non diffusés par l'au moins une particule sont recyclés et peuvent de nouveau participer à la détection des particules. La part de lumière utile dans la détection des particules augmente ainsi relativement à la quantité totale de lumière injectée via le détecteur. Pour une puissance lumineuse donnée, le détecteur collecte ainsi plus de rayons diffusés par une particule. Cela permet d'obtenir plus d'informations sur cette particule. La sensibilité de détection est ainsi améliorée pour une consommation donnée du détecteur.

Dans le cadre du développement de la présente invention, il est apparu que, dans le détecteur de l'art antérieur décrit dans le document FR3062209 mentionné ci-dessus, une majorité de lumière injectée dans la zone éclairée n'est pas diffusée par des particules. Cette part de lumière non diffusée, vis-à-vis de la quantité totale de lumière injectée, est d'autant plus importante que les particules à détecter sont petites. Ainsi, la part utile de lumière effectivement diffusée par les particules est faible, dans le détecteur de l'art antérieur mentionné ci-dessus. Cela peut être insuffisant pour détecter les particules, en particulier les petites particules. Une majorité de lumière injectée est en outre gaspillée dans le détecteur de l'art antérieur mentionné ci-dessus.

Le détecteur optique selon la présente invention permet au contraire d'augmenter la part de lumière effectivement diffusée par les particules. Cela améliore la sensibilité du détecteur. Cela améliore en particulier la capacité de détection des petites particules. Le détecteur optique selon la présente invention permet en outre de limiter le gaspillage de la lumière injectée.

En outre, dans le cadre du développement de la présente invention, il est apparu que, dans le détecteur de l'art antérieur mentionné ci-dessus, une partie de la lumière qui n'est pas diffusée par les particules et qui n'est pas utile à la détection, peut en outre éblouir le détecteur. L'éblouissement du détecteur peut ainsi être dû à des diffusions parasites de la lumière, notamment par les différentes faces et parois du détecteur. Cet éblouissement peut empêcher totalement la détection des petites particules.

En prévoyant de récupérer dans le guide une partie au moins des rayons introduits dans le canal mais non diffusés par les particules, le détecteur optique selon l'invention permet de limiter que des rayons non diffusés parviennent aux photodétecteurs. Le détecteur proposé permet ainsi de réduire l'éblouissement des photodétecteurs. Cela améliore encore la sensibilité du détecteur et la capacité de détection des petites particules.

De façon préférée mais optionnelle, le détecteur comprend en outre un miroir métallique configuré pour empêcher des rayons lumineux non diffusés par l'au moins une particule et non collectés par le guide, d'accéder aux photodétecteurs. Ce miroir métallique permet ainsi de limiter encore plus l'éblouissement du détecteur par les rayons lumineux non diffusés et non collectés. Ce mode de réalisation non limitatif permet d'améliorer encore la sensibilité du détecteur, surtout pour les petites particules.

Ainsi, la présente invention propose une solution efficace pour améliorer les détecteurs actuels.

La présente invention concerne aussi un procédé de fabrication d'un tel détecteur de particules comprenant :
- au moins un canal destiné à accueillir un fluide transportant au moins une particule, et à être traversé par des rayons lumineux de sorte que lesdits rayons lumineux soient en partie diffusés par l'au moins une particule,
- une pluralité de photodétecteurs aptes à recevoir lesdits rayons lumineux diffusés,
- au moins un guide optique configuré pour :
   - collecter des rayons lumineux non diffusés par l'au moins une particule, et pour
   - réinjecter lesdits rayons lumineux non diffusés dans le canal,

Ce procédé de fabrication comprend les étapes suivantes :
- fournir un substrat,
- former le guide optique par implantation d'ions dans le substrat,
- de façon optionnelle, former un miroir métallique sur une face du substrat,
- former le canal en perçant au moins le substrat au niveau du guide optique, de manière à ce que ledit canal traverse le guide optique, le guide optique comprenant ainsi au moins une première partie et une deuxième partie séparées l'une de l'autre par le canal, la première partie du guide présentant une première entrée et une première sortie débouchant sur le canal et la deuxième partie du guide présentant une deuxième entrée et une deuxième sortie débouchant sur le canal, lesdites première et deuxième parties étant agencées de manière à ce que la première entrée soit en regard de la deuxième sortie, et la deuxième entrée soit en regard de la première sortie,
- fournir une pluralité de photodétecteurs,
- assembler les photodétecteurs de ladite pluralité avec le substrat, en disposant les photodétecteurs au moins en partie autour du canal, et de préférence en tournant la face du substrat portant le miroir métallique en regard des photodétecteurs, de sorte que le miroir métallique soit disposé entre le guide optique et la pluralité de photodétecteurs.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La FIGURE 1A illustre schématiquement en coupe un détecteur de particules selon un mode de réalisation de la présente invention.
La FIGURE 1B illustre schématiquement en vue dessus un détecteur de particules selon un mode de réalisation de la présente invention illustré à la figure 1A.
La FIGURE 1C illustre schématiquement en coupe un détecteur de particules selon un autre mode de réalisation de la présente invention.
La FIGURE 2A illustre schématiquement un guide optique formé dans une matrice selon un mode de réalisation de la présente invention.
La FIGURE 2B présente une distribution spatiale d'intensité d'un mode optique fondamental guidé par le guide optique illustré à la figure 2A. Cette figure 2B est extraite de la publication « M.L. von Bibra et al. / Journal of Non-Crystalline Solids 239 (1998) 121-125 ».
La FIGURE 3 présente un taux de réinjection de rayons lumineux au sein d'un guide optique discontinu, en fonction de la distance séparant une sortie et une entrée du guide optique située l'une en face de l'autre, selon un mode de réalisation de la présente invention.
Les FIGURES 4A à 4H illustrent schématiquement des étapes de procédé de fabrication d'un détecteur de particules selon un mode de réalisation de la présente invention.
La FIGURE 5 illustre schématiquement en vue de dessus une étape de singularisation de guides optiques et de canaux fabriqués selon un mode de réalisation de la présente invention.
Les FIGURES 6A à 6E illustrent schématiquement des étapes de procédé de fabrication d'un détecteur de particules selon un autre mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différents éléments (particules, guide optique, miroir, support transparent) ne sont pas représentatives de la réalité.

### DESCRIPTION DÉTAILLÉE

Avant d'entamer une revue détaillée de modes de réalisation de l'invention, il est rappelé que, de manière facultative, l'invention comprend au moins l'une quelconque des caractéristiques optionnelles suivantes qui peuvent être utilisées en association ou alternativement.

Selon un exemple, le guide optique forme un circuit (c) courbe discontinu traversé par le canal.

Selon un exemple, le circuit courbe discontinu présente une forme ovale.

Selon un exemple, le guide optique est configuré pour réinjecter dans le canal au moins 90% des rayons lumineux non diffusés, après chaque traversée desdits rayons lumineux non diffusés dans le canal.

Selon un exemple, le guide optique comprend au moins une première partie et une deuxième partie séparées l'une de l'autre par le canal, la première partie du guide présentant une première entrée et une première sortie débouchant sur le canal et la deuxième partie du guide présentant une deuxième entrée et une deuxième sortie débouchant sur le canal, lesdites première et deuxième parties étant agencées de manière à ce que la première entrée soit en regard de la deuxième sortie, et la deuxième entrée soit en regard de la première sortie.

Selon un exemple, le guide optique est entouré par un substrat.

Selon un exemple, le guide optique présente un indice de réfraction ng et le substrat présente un indice de réfraction ns tels que ng - ns = Δn et 0 < Δn << 1, de sorte que les rayons lumineux guidés par le guide optique soient faiblement divergents. De préférence Δn < 0,1 et plus préférentiellement Δn < 0,01.

Selon un exemple, le guide optique est formé par implantation ionique d'ions hydrogène H+ dans le substrat, de sorte que ledit guide optique comprend une région enterrée du substrat présentant une concentration en hydrogène comprise entre 10¹⁹ et 10²¹ cm⁻³. Une telle concentration est typiquement obtenue par implantation d'ions H+ à une dose comprise entre 10¹⁵ et 10¹⁷ ions/cm².

Selon un exemple, les rayons lumineux sont issus d'une source et guidés par un guide primaire couplé à ladite source. Selon un exemple, le détecteur comprend la source émettant les rayons lumineux. Selon un exemple, le détecteur comprend le guide primaire guidant les rayons lumineux émis par la source.

Selon un exemple, le guide primaire est couplé au guide optique par un couplage critique.

Selon un exemple, le détecteur comprend en outre une source et un guide primaire couplé à ladite source et au guide optique, et les rayons lumineux sont issus de ladite source et guidés par le guide primaire et injectés dans le guide optique par un couplage critique entre le guide primaire et le guide optique.

Selon un exemple, le détecteur comprend en outre un miroir métallique configuré pour empêcher des rayons lumineux non diffusés par l'au moins une particule et non collectés par le guide, d'accéder aux photodétecteurs.

Selon un exemple, le miroir métallique est intercalé entre le guide optique et la pluralité de photodétecteurs, en empilement selon une direction transverse à une direction principale de propagation des rayons lumineux en sortie du guide optique.

Selon un exemple, le miroir métallique présente un bord en saillie d'une entrée ou d'une sortie du guide optique, ledit bord étant séparé du centre du canal par une distance dm inférieure à une distance dg séparant l'entrée ou la sortie du guide optique du centre du canal, de sorte que le guide optique soit en retrait du miroir métallique vis-à-vis du centre du canal.

Selon un exemple, la pluralité de photodétecteurs est optiquement accessible depuis une paroi du canal.

Selon un exemple de réalisation, le circuit fermé comprend plusieurs discontinuités. Chaque discontinuité définit une entrée et une sortie du guide. Une portion de canal sépare l'entrée et la sortie d'une même discontinuité. Ainsi, le guide comprend autant d'entrées et autant de sorties que de discontinuités. Selon un exemple de réalisation, le guide comprend deux discontinuités.

Selon un exemple ces deux discontinuités sont situées dans le prolongement l'une de l'autre, définissant ainsi un même canal s'étendant selon une direction principale. Selon un exemple alternatif, ces deux discontinuités définissent deux canaux parallèles.

Selon un exemple, l'implantation d'ions est une implantation à base d'ions hydrogène H+.

Selon un exemple, le substrat est assemblé à la pluralité de photodétecteurs par l'intermédiaire d'au moins une autre couche, ladite au moins une autre couche comprenant par exemple un support transparent.

Selon un exemple, la formation du canal comprend au moins un perçage parmi un perçage laser, un perçage mécanique, un perçage chimique.

Selon un exemple, au moins une partie du canal est polie de façon à présenter une rugosité moyenne RMS inférieure à 2 nm.

Selon un exemple, le procédé comprend en outre la formation d'un miroir métallique sur une face du substrat, ladite face étant tournée en regard des photodétecteurs lors de l'assemblage de sorte que le miroir métallique soit disposé entre le guide optique et la pluralité de photodétecteurs.

Selon un exemple, le miroir métallique est au moins en partie formé par une couche d'or permettant en outre un assemblage par thermocompression. Selon un exemple, l'assemblage est effectué par thermocompression à partir de la couche d'or.

La présente invention trouve pour domaine préférentiel d'application la détection de particules de diverses tailles, de préférence dans le domaine des particules microscopiques, voire nanométriques. Par exemple la présente invention peut servir à la détection de particules issues de fumées, de poudre d'explosifs, de particules polluantes, de particules de poussière, de particules d'allergènes telles que les pollens, les spores de moisissure, ou encore de particules cancérigènes, ou des particules biologiques telles que des bactéries, des virus, ou encore des exosomes.

La présente invention s'applique à tout type de particules véhiculées par un fluide, que celui-ci soit liquide et/ou gazeux.

Le fluide présent ou s'écoulant dans le volume utile de détection est par exemple de l'air. Tel est le cas pour les détecteurs intégrés dans les systèmes suivants : un système d'alarme anti-incendie, un système de détection d'incendie, un système de détection de poudre d'explosifs, un système d'analyse de la qualité d'un fluide tel que l'air, un système d'alarme anti-pollution.

Alternativement, le fluide peut être un liquide tel que de l'eau. Tel est le cas pour les détecteurs intégrés dans les systèmes de détection d'espèces microbiologiques.

Dans le cadre de la présente invention, le terme « particule » ou ses équivalents a pour définition un constituant d'un système physique considéré comme élémentaire par rapport aux propriétés étudiées.

Le terme particule désigne en particulier un objet solide, liquide ou solide mouillé en suspension dans un fluide tel que l'air et dont la taille est microscopique. Par exemple, une particule est un élément de matière dont la plus grande dimension est inférieure à quelques millimètre (10-3 mètres), de préférence à un millimètre, et de préférence à quelques dizaines de micromètres (10-6 mètres) et de préférence inférieure au micromètre, voire de l'ordre du nanomètre (10-9 m). Plus généralement, les particules présentent une taille supérieure à 40 Å (10-10 m) et sont donc considérées comme optiquement continue. De manière générale, il s'agit d'objets composés de matière dont les dimensions sont petites par rapport aux dimensions de la cavité ou du canal de circulation des particules.

On entend par « taille » ou « diamètre » d'une particule la distance maximale entre deux points de la particule. Typiquement, on assimile une particule à un objet de géométrie sphérique, sa taille correspond donc au diamètre de la sphère.

Dans ce qui suit, le terme « absorption » ou ses équivalents se réfère au phénomène par lequel l'énergie d'une onde électromagnétique est transformée en une autre forme d'énergie, par exemple par dissipation thermique. Dans la présente description, un matériau est considéré comme absorbant dès lors qu'il absorbe au moins 50% d'un rayonnement lumineux, de préférence au moins 75% et avantageusement au moins 90%.

Dans ce qui suit, le terme « diffusion » ou ses équivalents se réfère au phénomène par lequel un milieu de propagation produit une répartition, dans de nombreuses directions, de l'énergie d'une onde électromagnétique, lumineuse par exemple.

Dans ce qui suit, le terme « réflexion » ou ses équivalents se réfère au phénomène de réémission depuis un élément ou une surface d'un rayonnement lumineux incident. Dans la présente description, un élément est considéré comme réfléchissant dès lors qu'il réémet une partie au moins d'un rayonnement lumineux incident, cette partie étant supérieure ou égale à 50%. La partie réémise se dirige vers le même hémisphère duquel est issue la partie incidente. L'élément réfléchissant peut être caractérisé par un facteur de réflexion supérieur à 0,5.

Le détecteur selon l'invention comprend un guide optique. Ce guide optique est configuré pour guider la lumière. La lumière peut se propager au sein du guide optique selon plusieurs modes optiques de propagation, encore dénommés « modes optiques » ou simplement « modes ».

La pluralité de photodétecteurs se présente de préférence typiquement sous forme d'une ou plusieurs matrices de photodétecteurs constituant des pixels du détecteur. Ces matrices sont de préférence maintenues à proximité du canal par un support transparent. Cette pluralité de photodétecteurs peut également être dénommée « rétine ».

On entend par un matériau « transparent à une longueur d'onde donnée » ou simplement « transparent » un matériau laissant passer au moins 90% de l'intensité lumineuse de la lumière présentant cette longueur d'onde.

Le champ de vue peut être l'angle solide pour lequel le détecteur est sensible aux rayonnements électromagnétiques. Dans le cas présent, le champ de vue est de préférence l'angle solide défini par la pyramide à base rectangulaire (ladite base rectangulaire étant assimilée à la rétine du détecteur) et qui a pour sommet de la pyramide le centre géométrique de la particule. Selon les cas, le champ de vue peut être la longueur de l'intervalle d'angles vus par la rétine.

Le ou les faisceau(x) d'éclairage sont émis par une ou des source(s) primaire(s) correspondante(s). Ces sources primaires peuvent être polychromatiques ou monochromatiques. La lumière émise par ces sources appartient de préférence au domaine visible étendu au proche ultra-violet et au proche infrarouge, c'est-à-dire pour une gamme de longueur d'onde comprise entre 300 et 1000 nm. La « longueur d'onde » de la source désigne une longueur d'onde d'intérêt, par exemple la longueur d'onde présentant la plus grande intensité lumineuse ou la longueur d'onde centrale du spectre d'émission de la source.

Dans le cas d'une source polychromatique, cette longueur d'onde d'intérêt peut également s'entendre à une gamme de longueurs d'ondes de quelques dizaines de nanomètres, par exemple de l'ordre de 100nm, de préférence de l'ordre de 50nm.

Dans le cas d'une source monochromatique ou quasi-monochromatique, la longueur d'onde d'intérêt est l'unique longueur d'onde émise par cette source ou la longueur d'onde principalement émise par cette source.

On entend par un élément structurel, une couche, « à base » d'un matériau A, un élément structurel, une couche comprenant ce matériau A uniquement ou ce matériau A et éventuellement d'autres matériaux, par exemple des éléments dopants ou des éléments d'alliage. Ainsi, si un bloc transparent est désigné comme étant « à base de polymères », cela signifie qu'il peut être formé uniquement de polymères ou de polymères et éventuellement d'autres matériaux, par exemple un oxyde inorganique.

Il est précisé que dans le cadre de la présente invention, le terme « sur », « surmonte », « recouvre » ou « sous-jacent » ou leurs équivalents ne signifient pas « au contact de ». Ainsi par exemple, le dépôt d'un revêtement sur un élément structurel, ne signifie pas obligatoirement que ceux-ci sont directement au contact l'un de l'autre mais cela signifie que le revêtement recouvre au moins partiellement l'élément structurel en étant soit directement à son contact, soit en étant séparé de celui-ci par au moins une autre couche ou au moins un autre élément. Les termes relatifs « sous » « sur », « surmonte », « sous-jacent » indiquent des positions relatives selon l'axe z du repère représenté sur les figures d'accompagnement.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif. En particulier, le nombre de canaux, les différentes formes de guide optique et/ou les différentes formes de canaux illustrées sur les figures peuvent être combinés de manière à former un autre mode de réalisation qui n'est pas nécessairement illustré ou décrit. Un tel mode de réalisation n'est évidemment pas exclu de l'invention.

Les termes « sensiblement », « environ », « de l'ordre de » signifient « à 10% près » ou, lorsqu'il s'agit d'une orientation angulaire, « à 10° près » et de préférence « à 5° près ». Ainsi, une direction sensiblement normale à un plan signifie une direction présentant un angle de 90±10° par rapport au plan.

Pour déterminer les propriétés optiques du détecteur, des mesures de transmission et/ou de champ de vue peuvent être effectuées. On utilisera par exemple des techniques de spectrométrie et des techniques de sphère intégrante pour réaliser ces mesures.

Des méthodes de simulation, par exemple par calcul de lancer de rayons par méthode de Monte Carlo, ou par calcul de différences finies dans le domaine temporel (FDTD, acronyme de « Finite Différence Time Domain »), ou encore par méthode de propagation de faisceau BPM (acronyme de « Beam Propagation Method ») peuvent également permettre de déterminer la propagation des rayons lumineux au travers du guide optique d'un détecteur.

La présence simultanée d'un canal, d'un guide optique discontinu formant un circuit courbe et/ou d'un miroir peut être un indice de la mise en oeuvre d'un détecteur tel que décrit dans la présente invention.

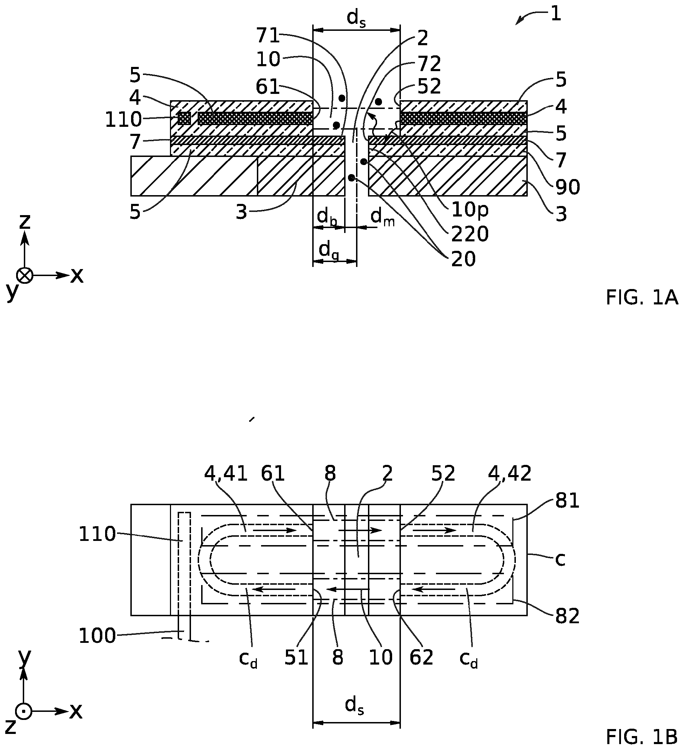

Un premier exemple de détecteur selon l'invention va maintenant être décrit en référence aux figures 1A et 1B. Le principe de fonctionnement de ce détecteur 1 est le suivant :
Une source 100, qui peut être externe au détecteur 1, fournit typiquement un faisceau de rayons lumineux. Ce faisceau de rayons lumineux 10 est au moins en partie guidé par un guide optique 4 jusqu'au canal 2. Le faisceau de rayons lumineux 10 traverse alors le canal 2 dans lequel des particules 20 à détecter circulent (figure 1A). Une petite partie des rayons lumineux 10 est diffusée par une ou plusieurs particules 20 en direction des photodétecteurs 3. Les photodétecteurs 3 reçoivent ces rayons lumineux diffusés. L'information portée par ces rayons lumineux diffusés est ensuite analysée de façon à caractériser les particules 20 circulant dans le canal 2, par exemple en nombre, en taille et/ou en composition chimique.

Une grande partie des rayons lumineux 10 traversant le canal 2 n'est cependant pas diffusée ou déviée. La direction de propagation des rayons lumineux 10 dans le détecteur est illustrée à la figure 1B. Avantageusement, le guide optique 4 est configuré pour récupérer une majorité des rayons lumineux 10 non diffusés. Typiquement, les rayons lumineux 10 sont guidés par le guide optique 4 jusqu'à une sortie 61 du guide optique 4 débouchant dans le canal 2, puis, après avoir traversé le canal 2, les rayons lumineux 10 non diffusés sont collectés par une entrée 52 du guide optique 4. Ces rayons lumineux 10 non diffusés et collectés sont alors guidés par le guide optique 4 pour être réinjectés dans le canal 2, par exemple au niveau d'une sortie 62 débouchant dans le canal 2. Ces rayons lumineux 10 issus de la sortie 62 traversent alors à nouveau le canal 2. Un même rayon lumineux 10 peut ainsi traverser au moins deux fois le canal 2. Cela augmente la probabilité, pour un rayon lumineux donné, d'être diffusé par une particule 20.

De préférence, la partie des rayons lumineux 10 non diffusés à l'issue de la deuxième traversée du canal 2 est collectée par une entrée 51 du guide optique 4. Ces rayons lumineux 10 non diffusés et collectés par l'entrée 51 sont alors à nouveau guidés par le guide optique 4 pour être réinjectés dans le canal 2, par exemple au niveau de la sortie 61.

Un rayon lumineux 10 peut ainsi traverser plusieurs fois le canal 2, tant qu'il n'a pas été diffusé par une particule 20. Cela permet de recycler la lumière injectée dans le guide optique 4. Pour une quantité donnée de lumière injectée dans le détecteur 1, cela permet d'augmenter la proportion de rayons lumineux effectivement diffusés par des particules 20. L'efficacité du détecteur 1 est ainsi améliorée. La sensibilité du détecteur 1 est également améliorée. Cela améliore notamment la capacité de détection des petites particules, présentant typiquement une taille inférieure ou égale à 100 nm, du détecteur 1.

Plusieurs exemples de détecteurs 1 fonctionnant selon ce principe général sont décrits dans la suite. Le guide optique 4 est discontinu et traversé par le canal 2. Le guide optique 4 illustré à la figure 1B comprend deux parties 41, 42. Ces deux parties 41, 42 sont disjointes et séparées par le canal 2. Elles peuvent être séparées par une distance ds de l'ordre de quelques centaines de micromètres, par exemple 500 µm, à quelques millimètres, par exemple 2 mm.

Le canal 2 s'étend ainsi en travers d'un premier bras 81 de détection et d'un deuxième bras 82 de détection. Chaque bras 81, 82 comprend respectivement une entrée 52, 51 et une sortie 61, 62 du guide optique 4. Une zone de détection 8 est ainsi définie dans le canal 2, entre une entrée et une sortie du guide optique 4. La circulation des particules 20 dans le canal 2 peut être configurée de façon à ce que chaque particule traverse successivement les zones de détection 8 des deux bras 81, 82 de détection. Sur la figure 1B, cela correspond à une circulation des particules 20 dans le plan de la feuille. Cela permet de doubler la probabilité de détection d'une particule. Cela peut être utile pour la détection qualitative de particules toxiques par exemple. Selon une autre possibilité, la circulation des particules 20 dans le canal 2 peut être configurée de façon à ce qu'une particule traverse l'une ou l'autre des zones de détection 8 des bras 81, 82 de détection. Sur la figure 1B, cela correspond à une circulation des particules 20 selon une direction sensiblement normale au plan de la feuille. Cela permet d'augmenter la capacité de détection en nombre de particules.

Selon un autre exemple, le guide optique 4 ne comprend qu'une zone de détection sur un bras de détection. Le canal 2 ne traverse le guide optique 4 qu'en un seul endroit. Selon un autre exemple, le détecteur 1 comprend plusieurs canaux 2 distincts. Ceux-ci peuvent traverser un même bras de détection, ou chacun un bras de détection, ou encore plusieurs bras de détection chacun. Ainsi, différentes zones de détection 8 peuvent être envisagées pour le détecteur 1 en fonction des besoins.

Comme illustrée à la figure 1B, le guide optique 4 suit typiquement un circuit courbe c traversé par le canal 2. Ce circuit peut présenter une forme ovale ou en anneau avec des portions droites cd. Le canal 2 coupe le circuit c de préférence au niveau des portions droites cd. Une entrée du guide optique 4 présente ainsi de préférence le même axe optique qu'une sortie du guide optique 4. Les entrées 51, 52 sont ainsi face aux sorties 62, 61, respectivement. Cela permet d'optimiser la collecte des rayons lumineux 10 non diffusés. Le circuit c s'étend de préférence dans un plan xy. Le guide optique 4 est dès lors planaire. Cela permet de former, typiquement selon une direction z normale au plan xy, un empilement comprenant le guide optique 4 et une matrice planaire de photodétecteurs 3. Cela améliore la compacité du détecteur 1. Selon une autre possibilité, des circuits courbes tridimensionnels peuvent également être envisagés.

Les photodétecteurs 3 forment typiquement des pixels d'une matrice de détection, par exemple un imageur CMOS (c'est-à-dire un imageur issu d'une technologie de transistors Complémentaires Métal-Oxyde-Semi-conducteur). Ils sont de préférence situés sous les bras de détection, en bordure et autour du canal 2, tel qu'illustré à la figure 1A. Ainsi, un imageur CMOS troué peut être utilisé pour former la pluralité de photodétecteurs 3 traversée par le canal 2.

La lumière circulant dans le guide optique 4 est de préférence fournie par une source 100. Cette source 100 peut être un laser fournissant une lumière monochromatique ou une diode électroluminescente fournissant une lumière polychromatique. La lumière issue de la source 100 peut être injectée dans un guide primaire 110 couplé avec le guide optique 4. Ce couplage permet de préserver la forme en anneau du guide optique 4. Le circuit de recyclage de la lumière n'est ainsi pas perturbé par l'injection de lumière issue de la source 100. Le couplage entre le guide primaire 110 et le guide optique 4 est de préférence un couplage critique. Le couplage critique survient lorsque les guides 110, 4 forment un système résonant et que la fréquence de résonance correspond sensiblement à la fréquence de la lumière injectée. Cela permet de façon connue de maximiser le transfert de puissance optique depuis le guide primaire 110 jusqu'au guide optique 4. Le guide primaire 110 n'est pas nécessairement situé à la même hauteur selon z que le guide optique 4. Il peut être situé au-dessus du guide optique 4. Ce positionnement peut être choisi en fonction de la compacité souhaitée du détecteur 1.

Le détecteur 1 comprend de préférence un miroir métallique 7 intercalé selon z entre le guide optique 4 et la matrice de photodétecteurs 3. Un support 90 transparent peut en outre être intercalé entre le miroir 7 et les photodétecteurs 3.

Le support 90 présente typiquement une paroi 220 débouchant sur le canal 2. Les photodétecteurs 3 sont optiquement accessibles aux rayons diffusés par les particules, au travers de cette paroi 220. Les photodétecteurs 3 s'étendent de préférence selon x jusqu'à l'aplomb de cette paroi 220.

Le miroir 7 est notamment configuré pour limiter l'éblouissement des photodétecteurs 3 dû à des diffusions parasites de rayons lumineux. Comme illustré à la figure 1A, le miroir 7 présente de préférence un ou des bords 71, 72 s'avançant vers le centre du canal 2 et couvrant au moins en partie le support 90. Ces bords 71, 72 s'avancent en saillie des faces d'entrée 52 et de sortie 61 du guide optique 4. La distance dm séparant le bord 71 du centre du canal 2 est inférieure à la distance dg séparant la sortie 61 (ou, symétriquement, l'entrée 52) du centre du canal 2. Ainsi, des rayons lumineux parasites 10p, par exemple diffusés au niveau des entrées/sorties 52, 61, sont réfléchis par les bords 71, 72 du miroir 7. Cela évite que ces rayons lumineux parasites 10p éblouissent les photodétecteurs 3. La réduction de l'éblouissement du détecteur 1 permet d'augmenter proportionnellement la sensibilité du détecteur 1. Le ou les bords 71, 72 présentent typiquement une dimension db selon x de l'ordre de 10 µm. La distance dg est typiquement de l'ordre de ds/2. La distance dm est donc très supérieure à la dimension db, contrairement à la représentation faite en figure 1A. Les dimensions et distances illustrées dans cette représentation sont volontairement modifiées par souci de clarté.

Une simulation FDTD de l'éblouissement des photodétecteurs 3, en présence du miroir 7, montre que la seule source d'éblouissement est la diffraction des rayons lumineux issus du guide optique 4 par le bord 71, 72 du miroir métallique 7. Pour un retrait de 10 µm selon x du guide optique 4 par rapport au bord 71, 72 du miroir métallique 7, le calcul FDTD montre que le taux de rayons lumineux issus du guide optique 4 atteignant les photodétecteurs 3 par diffraction sur le bord 71, 72 est de 1.10-7. Ce taux est très faible. Il est notamment inférieur au taux de rayons lumineux atteignant les photodétecteurs 3 par diffusion d'une particule unique de 100 nm. Une telle réduction de l'éblouissement permet une sensibilité de 30ng/m3, pour une zone de détection illuminée au-dessus des photodétecteurs 3 de 40µm2×0.5mm. Cette sensibilité est 107 fois meilleure que la sensibilité d'un détecteur sans miroir métallique (0.3g/m3). Cela améliore considérablement la capacité de détection des petites particules, typiquement de taille inférieure ou égale à 100 nm, du détecteur 1.

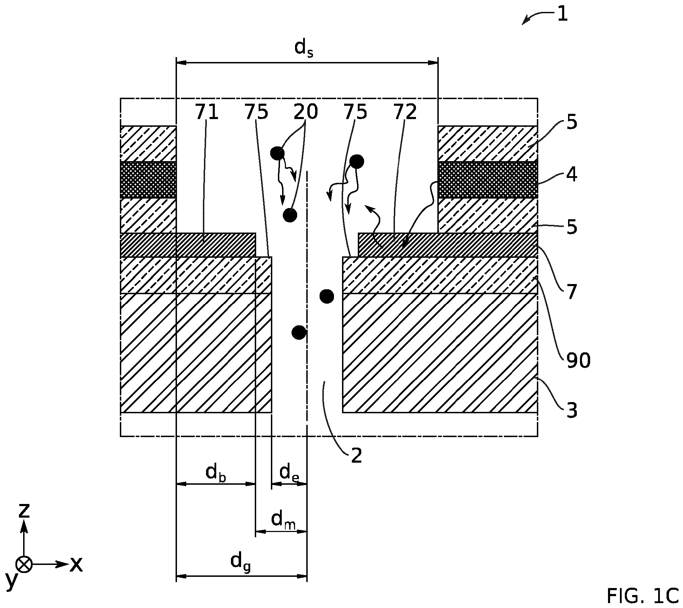

Selon une possibilité illustrée à la figure 1C, le support 90 présente de préférence un ou des épaulements 75 s'avançant vers le centre du canal 2. Ces épaulements 75 s'avancent en saillie des bords 71, 72 du miroir 7. L'épaulement 75 est séparé du centre du canal par une distance de inférieure à la distance dm séparant le bord 71 (ou, symétriquement, le bord 72) du centre du canal 2. La distance de peut être comprise entre 10 µm et 100 µm. Ainsi, les bords 71, 72 du miroir 7 ne couvrent pas complètement le support 90. Les photodétecteurs 3 assemblés au support 90 peuvent ainsi s'avancer vers le centre du canal 2 sans être totalement couverts par le miroir 7. Cela permet d'améliorer l'angle de vue selon lequel les photodétecteurs 3 reçoivent les rayons lumineux diffusés par les particules 20. En particulier, l'accès optique aux photodétecteurs ne se fait plus uniquement par la ou les parois 220. Les épaulements 75 améliorent l'accès optique aux photoétecteurs 3 pour les rayons lumineux diffusés.

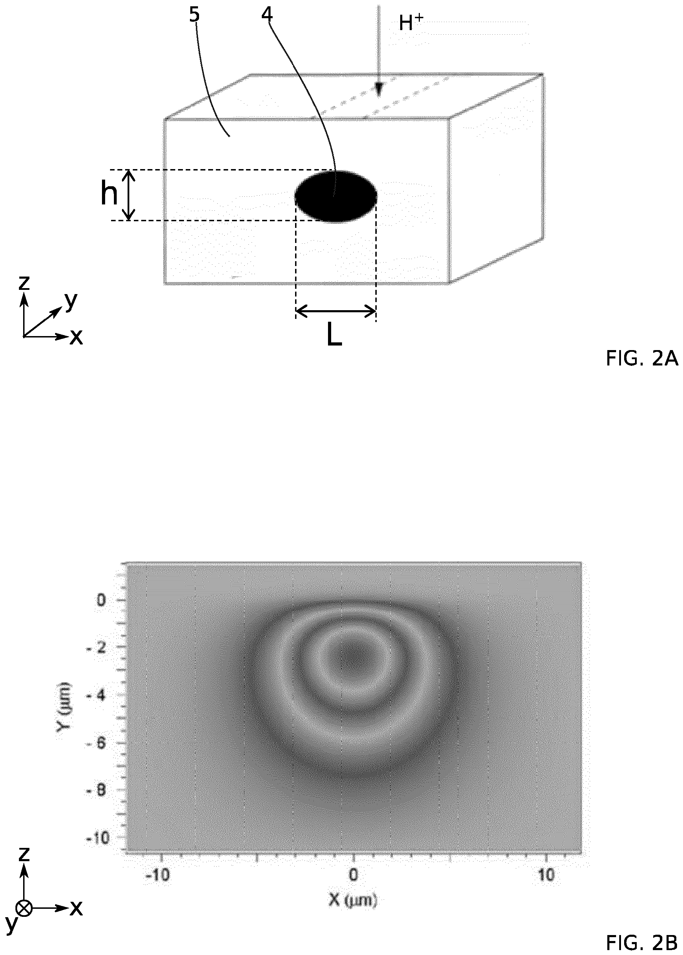

Comme illustré à la figure 2A, le guide optique 4 est de préférence un guide à implantation ionique. Un tel guide peut être obtenu par implantation d'ions hydrogène H+ au sein d'un substrat 5, par exemple à base de silice. Le guide ainsi formé après implantation peut présenter une section, dans le plan xz, de forme ovale. Les dimensions du guide optique 4 selon x et selon z ne sont ainsi pas nécessairement égales. La dimension h selon z du guide optique 4 est typiquement de l'ordre de quelques microns, par exemple comprise entre 2 µm et 10 µm. La dimension L selon x du guide optique 4 est typiquement de l'ordre de quelques microns, par exemple comprise entre 3 µm et 12 µm.

Les guides à implantation ionique ont l'avantage de présenter un faible écart d'indice de réfraction entre le guide optique 4 et le substat 5. D'autres guides optiques à faibles écarts d'indices peuvent également être utilisés. Parmi ce type de guides optiques, un guide polymère modifié localement par laser peut par exemple être mis en oeuvre dans le détecteur 1.

On peut également modifier l'écart d'indice en modifiant les fractions d'un mélange de polymère optiques (par exemple les polymères commerciaux OrmoCore/OrmoClad). On peut aussi modifier les propriétés du verre localement par exposition d'un laser femtoseconde focalisé, par exemple tel que présenté dans le document « Femtosecond laser modification of glass, D.M.Krol, Journal of Non-Crystalline Solids, Volume 354, Issues 2-9, 15 January 2008, Pages 416-424 ».

Typiquement, le guide optique 4 présente un indice de réfraction ng et le substrat 5 entourant le guide optique 4 présente un indice de réfraction ns tels que ng - ns = Δn << 1 . En particulier, on choisira Δn ≤ 0,1, et de préférence Δn ≤ 0,01, par exemple Δn ≈ 10-3. Un tel écart d'indice Δn, dit faible, permet de guider les rayons lumineux selon des modes optiques très déconfinés. Les modes optiques déconfinés sont spatialement étendus. Ainsi, comme illustré à la figure 2B, la section selon xz d'un mode optique déconfiné peut s'étendre jusqu'à une dizaine de microns. Comme la longueur d'onde des rayons lumineux propagés selon ces modes optiques déconfinés est typiquement de l'ordre de quelques centaines de nanomètres, pour une détection dans le visible, les modes optiques guidés par le guide optique 4 à implantation ionique sont faiblement divergents. Cela permet d'obtenir en sortie 61, 62 du guide optique 4 un faisceau de rayons lumineux 10 faiblement divergent. Un tel faisceau est donc bien collimaté et peut être facilement réinjecté en entrée 51, 52 du guide optique 4, après avoir traversé le canal 2. Il est ainsi possible d'extraire les rayons lumineux 10 en sortie 61, 62 du guide 4 et les réinjecter dans une entrée 51, 52 distante du guide 4 avec des pertes de couplage modérées.

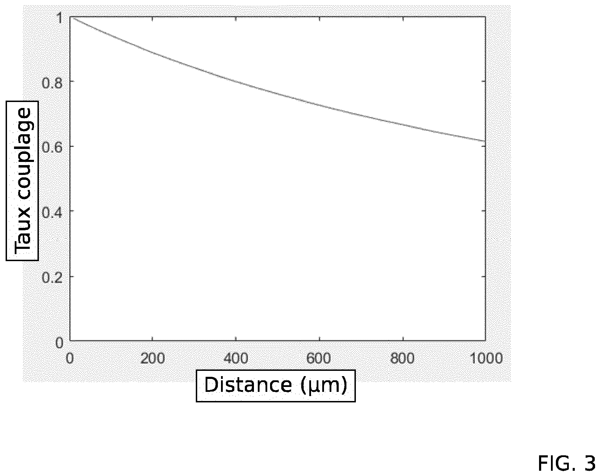

La figure 3 illustre un calcul du taux de réinjection des rayons lumineux entre une sortie et une entrée face à face d'un guide optique 4 à implantation ionique, en fonction de la distance ds entre l'entrée et la sortie, pour un mode optique de 10µm de section. Ce taux de réinjection est de 80% pour une distance de quelques centaines de microns (environ 400 µm). Il est ainsi possible de recycler significativement la lumière, tout en ayant un canal de dimensions suffisantes pour laisser passer les particules.

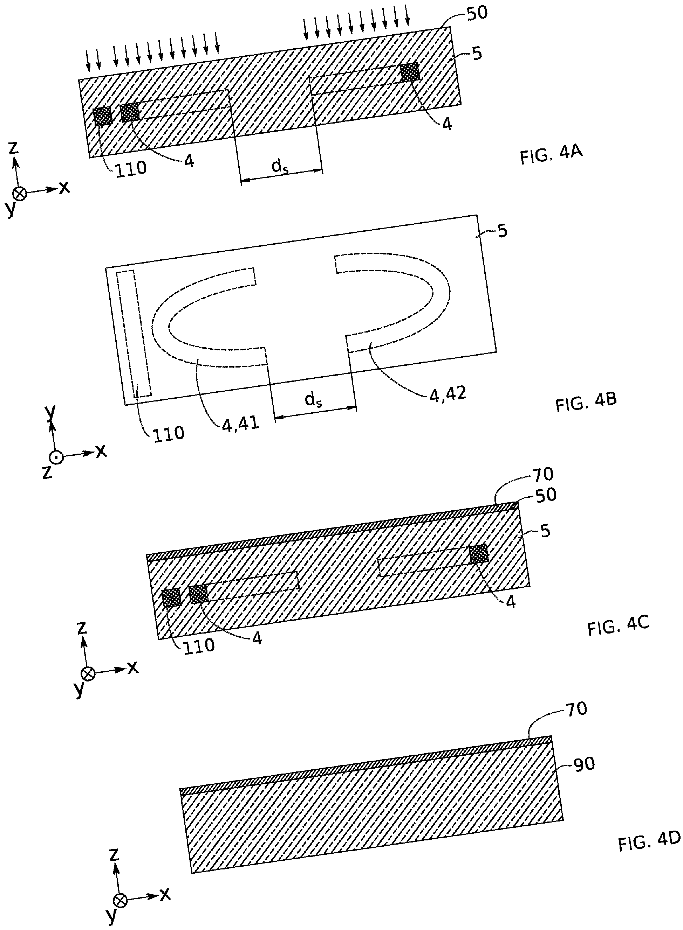

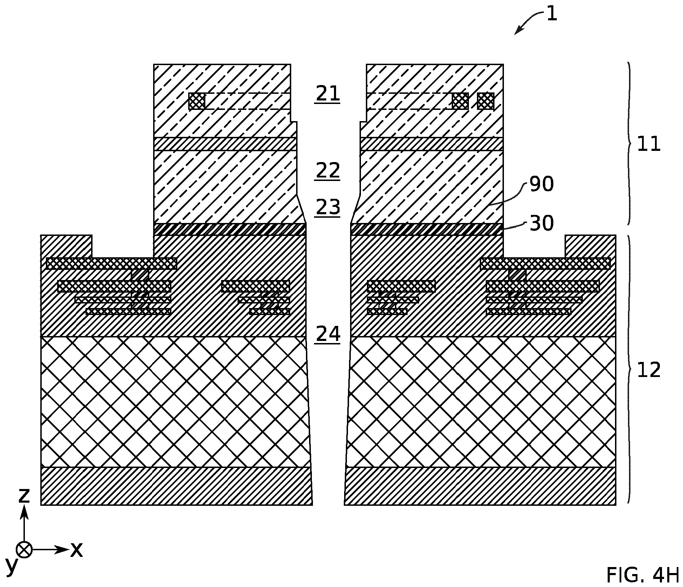

Ce détecteur peut avantageusement être fabriqué à l'aide des technologies classiques de micro-fabrication. Un premier exemple de fabrication d'un tel détecteur 1 est illustré aux figures 4A à 4H.

Les figures 4A et 4B illustrent la fabrication du guide optique 4 par implantation ionique d'ions H+ dans un substrat 5. Le substrat 5 est de préférence en silice fondue de synthèse de haute pureté, par exemple de type SUPRASIL^{®} du fabriquant Heraeus. Ce guide optique 4 à implantation ionique peut typiquement être réalisé par le procédé décrit dans le document : « Mode profile modification of H+ ion beam irradiated waveguides using UV processing, M.L. von Bibraa, J.Canning, A.Roberts, Journal of Non-Crystalline Solids 239 (1998) 121-125 ».

L'implantation ionique peut être réalisée selon une technique d'écriture directe avec un faisceau d'ions H+ à une énergie de 2,5MeV. Différentes formes, par exemple en deux parties 41, 42 comme illustré à la figure 4B, peuvent être réalisées par cette technique. La dose implantée est typiquement comprise entre 1 x 10¹⁵ ions/cm² et 1 x 10¹⁷ ions/cm², par exemple de l'ordre de 1 x 10¹⁶ ions/cm². Cela permet d'obtenir une région enterrée à environ 50µm sous la face 50, d'environ 5µm de hauteur et d'environ 7µm de largeur. Cette région enterrée présente typiquement une concentration en hydrogène comprise entre 10¹⁹ et 10²¹ cm⁻³. Cette région enterrée forme un guide optique 4. Une insolation ultraviolet (UV) à une longueur d'onde de 193nm est de préférence effectuée, à une dose comprise entre 0,2 à 3 KJ/cm², de manière à ajuster les performances du guide 4. Le guide primaire 110 peut être réalisé de la même manière que le guide optique 4.

Comme illustré à la figure 4C, une couche de scellement 70 en or (Au) de 300nm d'épaisseur peut être déposée par pulvérisation cathodique sur la face 50 du substrat 5. Une couche d'accroche, typiquement une couche de titane (Ti) de 10nm d'épaisseur (non visible), peut être intercalée entre la couche de scellement 70 en or et le substrat 5.

Comme illustré à la figure 4D, un support transparent 90 est de préférence prévu pour assembler ultérieurement les photodétecteurs au substrat 5. Ce support 90 permet également d'ajuster la profondeur de champ séparant la zone de détection des photodétecteurs 3. Le support 90 transparent peut être en verre, par exemple en verre Borofloat 33. Il présente typiquement une épaisseur de quelques centaines de microns, par exemple de façon standard 725 µm. De préférence, une deuxième couche de scellement 70 en or et/ou une deuxième couche d'accroche en Ti sont déposées, comme précédemment, sur ce support 90 transparent. Cela permet d'assembler le substrat 5 et le support 90 par thermocompression Au-Au. De façon connue, quelques centaines de nanomètres d'Au, par exemple 200 nm à 300 nm sur chacune des faces à assembler, permettent de réaliser cette thermocompression Au-Au. Les couches métalliques de scellement et/ou d'accroche peuvent avantageusement former ultérieurement le miroir métallique du détecteur. Selon une possibilité, avant assemblage du substrat 5 et du support 90, la ou les couches de scellement et/ou d'accroche peuvent être structurées par lithographie/gravure de façon à former ultérieurement les bords 71, 72 du miroir métallique.

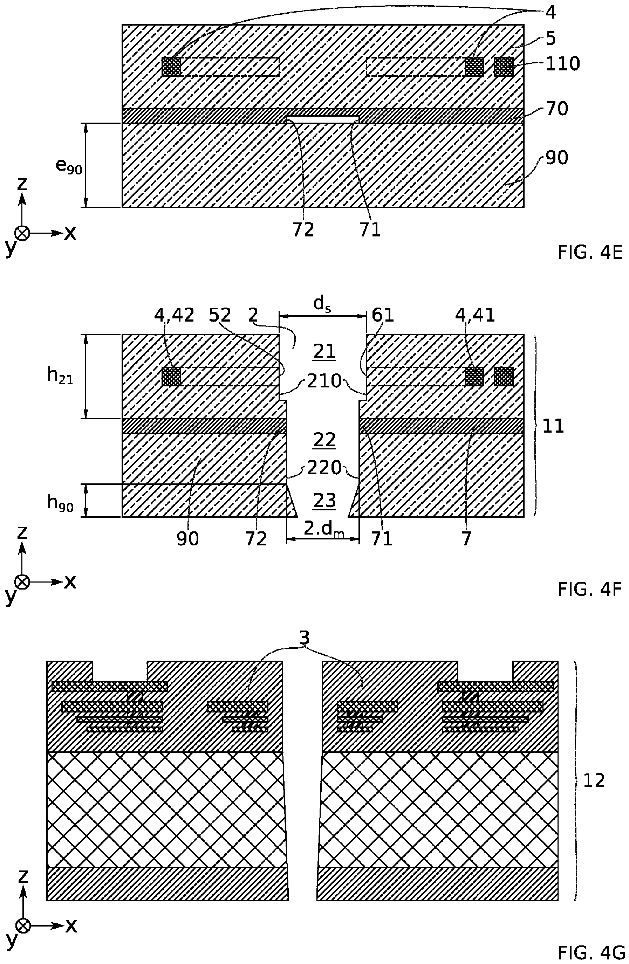

Comme illustré à la figure 4E, le substrat 5 comprenant le guide optique 4 à implantation ionique est assemblé par thermocompression Au-Au au support 90 transparent. Après assemblage, l'épaisseur du support 90 peut être réduite par rognage et/ou polissage mécano-chimique. L'épaisseur e90 du support 90 est ainsi ajustée de préférence entre 200 µm et 500 µm. Cela permet de maximiser l'angle de vue sous lequel les photodétecteurs reçoivent les rayons lumineux diffusés par les particules.

Comme illustré à la figure 4F, le canal 2 peut ensuite être formé selon z à travers le substrat 5, entre les parties 41, 42 du guide optique 4, et à travers le support 90. Le canal 2 présente typiquement une section, dans le plan xy, variable selon la profondeur z. Ainsi, une première partie 21 du canal 2 affleurant les faces d'entée 51 et de sortie 62 du guide optique 4 peut présenter une première section, et une deuxième partie 22 du canal 2 traversant le miroir 7 peut présenter une deuxième section inférieure à la première section. La première section présente typiquement une dimension ds selon x et la deuxième section présente typiquement une dimension 2.dm selon x. Cela permet de former un épaulement au niveau des bords 71, 72 du miroir 7.

Les première et deuxième parties 21, 22 du canal 2 peuvent être réalisées par sciage ou perçage partiel. Ainsi, un sciage ou un perçage, avec respectivement une lame ou un foret de dimension 2.dm selon x, permet de former d'abord la deuxième partie 22 du canal 2. La profondeur de sciage ou de perçage est de préférence choisie de façon à conserver une partie inférieure du support 90 d'épaisseur h90 de l'ordre de 200 µm. Ainsi, les deux parties 41, 42 du guide optique 4 restent solidaires l'une de l'autre. Cela permet d'éviter une étape ultérieure de réalignement des parties du guide optique entre elles. Ensuite, un sciage ou un perçage, respectivement au moyen d'une lame ou d'un foret de dimension ds selon x, avec typiquement ds = 2.dm + 20µm, permet de former la première partie 21 du canal 2. La profondeur h21 de sciage ou de perçage est ici typiquement inférieure ou égale à 100 µm. Les lames ou les forets permettent de préférence d'obtenir une finition polie optique au niveau des parois 210, 220 du canal 2. Une telle finition correspond typiquement à une rugosité moyenne RMS inférieure à 2 nm. Cela permet de limiter le phénomène de diffusion parasite, en particulier au niveau des bords 71, 72. Une finition polie optique permet in fine de réduire l'éblouissement des photodétecteurs. Une étape facultative de recuit ou de traitement chimique à l'issue du perçage ou du sciage peut être effectuée de façon à diminuer la rugosité et/ou à améliorer l'état de surface du canal.

Une troisième partie 23 du canal 2 peut ensuite être formée par perçage laser. D'autres modes de réalisation des parties 21, 22, 23 du canal 2 sont envisageables. En particulier, des gravures par voie chimique (gravures humides) ou par plasma (gravures sèches) peuvent être effectuées en remplacement de ou en combinaison avec le perçage mécanique.

La structure obtenue sur la figure 4F forme la partie supérieure 11 du détecteur 1. Cette partie supérieure 11 est ensuite assemblée à une partie inférieure 12 du détecteur, comprenant une pluralité de photodétecteurs 3. Comme illustré à la figure 4G, cette partie inférieure 12 peut typiquement se présenter sous forme d'un imageur CMOS troué. Cet imageur CMOS troué est ensuite assemblé, par exemple par l'intermédiaire d'une colle optique 30, sur la face inférieure 91 du support 90 (figure 4G). La colle optique 30 est typiquement transparente aux longueurs d'onde de fonctionnement du détecteur 1. La partie supérieure 11 est positionnée vis-à-vis de la partie inférieure 12 de manière à ce que la partie 23 du canal 2 coïncide avec le trou 24 de l'imageur CMOS. Cet alignement peut typiquement se faire via des marques d'alignements. Le canal 2 du détecteur 1 comprend ainsi plusieurs parties 21, 22, 23, 24 au travers du substrat 5, du support 90 et de l'imageur CMOS. Un détecteur 1 fonctionnel est ainsi obtenu. Selon une possibilité alternative, le perçage du canal 2 se fait après assemblage de la partie supérieure 11 sur la partie inférieure 12.

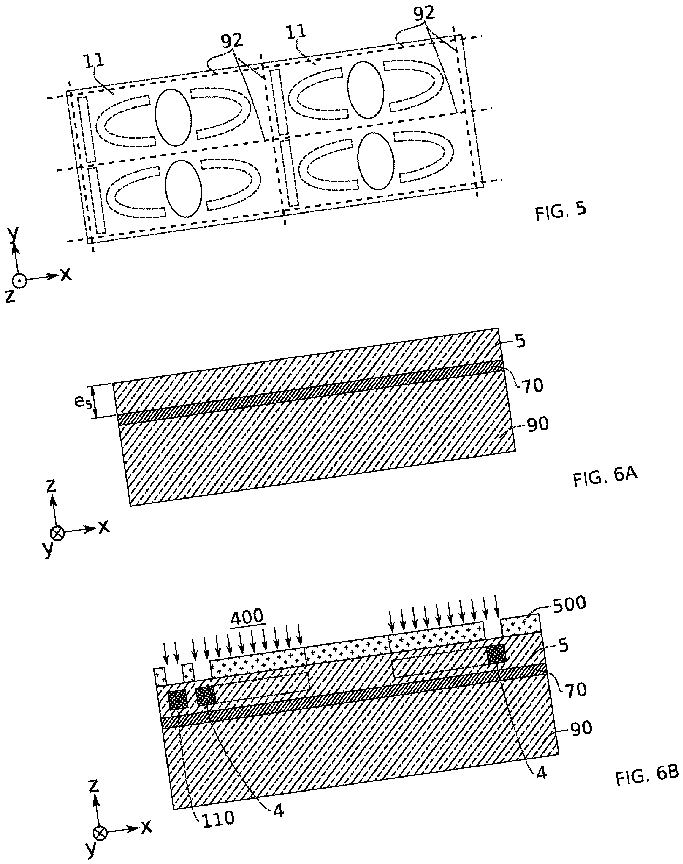

Selon une possibilité illustrée à la figure 5, plusieurs parties supérieures 11 sont formées simultanément côte à côte. De façon similaire, plusieurs parties inférieures 12 peuvent être formées simultanément côte à côte. Typiquement une pluralité d'imageurs CMOS est formée à partir d'une même plaquette ou wafer en silicium, dit wafer CMOS. Une pluralité de substrats 5 comprenant des guides optiques 4 est formée à partir d'une même plaquette ou wafer en silice fondue, dit premier wafer. Une pluralité de supports 90 est formée à partir d'une même plaquette ou wafer en verre, dit deuxième wafer. Les premier et deuxième wafer sont alignés relativement l'un à l'autre et assemblés par thermocompression Au-Au afin de former la pluralité de parties supérieures 11. Un premier découpage est ensuite effectué, au niveau des zones de découpe 92, de façon à séparer chaque partie supérieure 11.

Ce premier découpage peut se faire avant report et assemblage des parties supérieures 11 sur les parties inférieures 12. Chaque partie supérieure 11 peut ainsi être alignée et assemblée indépendamment avec le wafer CMOS, par l'intermédiaire d'un équipement dit « pick and place » permettant de choisir et placer indépendamment les parties supérieures 11. Un deuxième découpage est ensuite effectué pour séparer entre elles les parties inférieures 12 surmontées par les parties supérieures 11. Une pluralité de détecteurs unitaires, séparés les uns des autres, est ainsi obtenue.

Selon une autre possibilité, le premier découpage est effectué après report et assemblage des parties supérieures 11 sur les parties inférieures 12. Dans ce cas, une étape de nettoyage des résidus en verre est typiquement requise entre le premier découpage et le deuxième découpage.

Un deuxième exemple de fabrication d'un détecteur 1 est illustré aux figures 6A à 6E. Seule la fabrication de la partie supérieure 11 du détecteur 1 diffère du précédent mode de réalisation. L'assemblage avec la partie inférieure et le découpage en détecteurs unitaires se fait comme précédemment.

Comme illustré à la figure 6A, une couche métallique 70, comprenant typiquement une couche d'accroche en Ti et une couche d'or, et présentant par exemple une épaisseur de 100 nm, est déposée sur le support 90 transparent, par exemple en verre Borofloat 33. Le substrat 5 est alors formé directement sur la couche métallique 70, de préférence par dépôt chimique en phase vapeur assisté par plasma (PECVD) d'oxyde de silicium. Le substrat 5 en oxyde de silicium ainsi déposé présente par exemple une épaisseur e5 de 20 µm.

Le guide optique 4 et/ou le guide primaire 110 sont ensuite réalisé par implantation d'ions H+ comme précédemment. Cette implantation 400 peut être effectuée par l'intermédiaire d'une étape de photolithographie standard basée sur un masque en résine 500 (figure 6B).

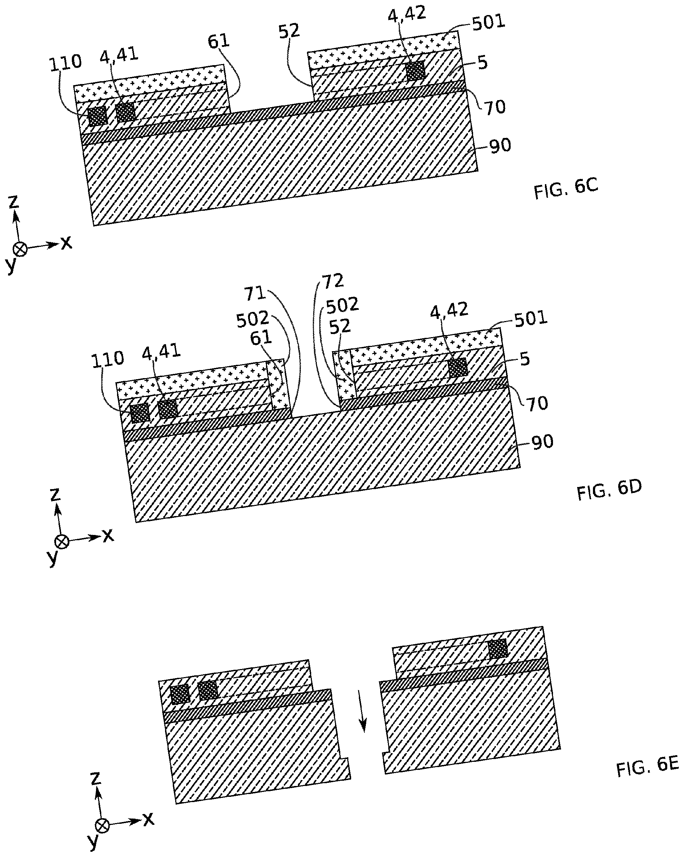

Comme illustré en figure 6C, une deuxième étape de lithographie avec dépôt d'un masque 501 en résine permet de graver l'oxyde de silicium du substrat 5 entre les deux parties 41, 42 du guide optique 4. Cette gravure est typiquement une gravure anisotrope selon z configurée pour s'arrêter sur la couche métallique 70.

Une couche de protection 502 en résine est alors formée sur les faces d'entrée 52 et de sortie 61 du guide optique 4 (figure 6D). Cette couche de protection 502 peut être déposée par spray et prend typiquement appui sur la couche métallique 70. Elle peut présenter une épaisseur selon x de l'ordre de 10 µm. La partie exposée de la couche métallique 70 est alors gravée jusqu'au support 90. Les parties de la couche métallique 70 protégées par la couche de protection 502 forment avantageusement les bords 71, 72 du miroir 7.

Après retrait de la résine, le canal 2 peut être percé comme précédemment afin d'obtenir la partie supérieure 11 du détecteur 1 (figure 6E).

L'invention n'est pas limitée aux modes de réalisation décrits mais s'étend à tout mode de réalisation entrant dans la portée des revendications indépendantes.

## Revendications

1. Détecteur optique (1) de particules comprenant :
- au moins un canal (2) destiné à accueillir un fluide transportant au moins une particule (20), et à être traversé par des rayons lumineux (10) de sorte que lesdits rayons lumineux soient en partie diffusés par l'au moins une particule,
- une pluralité de photodétecteurs (3) aptes à recevoir lesdits rayons lumineux diffusés,
ledit détecteur (1) étant **caractérisé en ce qu'**il comprend au moins un guide optique (4) comprenant au moins une première partie (41) et une deuxième partie (42) séparées l'une de l'autre par le canal (2), la première partie (41) du guide (4) présentant une première entrée (51) et une première sortie (61) débouchant sur le canal (2) et la deuxième partie (42) du guide (4) présentant une deuxième entrée (52) et une deuxième sortie (62) débouchant sur le canal (2), lesdites première et deuxième parties (41, 42) étant agencées de manière à ce que la première entrée (51) soit en regard de la deuxième sortie (62), et la deuxième entrée (52) soit en regard de la première sortie (61), le guide optique (4) étant configuré pour :
- collecter, au niveau d'au moins une entrée du guide parmi les première et deuxième entrées (51, 52), des rayons lumineux non diffusés par l'au moins une particule et ayant traversés le canal, et pour
- réinjecter dans le canal, par au moins une sortie du guide parmi les première et deuxième sorties (61, 62), lesdits rayons lumineux non diffusés.

2. Détecteur optique (1) selon la revendication précédente dans lequel le guide optique forme un circuit (c) courbe discontinu présentant une forme ovale et traversé par le canal.

3. Détecteur optique (1) selon l'une quelconque des revendications précédentes dans lequel le guide optique est configuré pour réinjecter dans le canal au moins 90% des rayons lumineux non diffusés, après chaque traversée desdits rayons lumineux non diffusés dans le canal.

4. Détecteur optique (1) selon l'une quelconque des revendications précédentes dans lequel le guide optique est entouré par un substrat (5), et dans lequel le guide optique (4) présente un indice de réfraction ng et le substrat (5) présente un indice de réfraction ns tels que ng - ns = Δn et 0 < Δn ≤ 0,1.

5. Détecteur optique (1) selon la revendication précédente dans lequel le guide optique (4) est formé par implantation ionique d'ions hydrogène H+ dans le substrat (5), de sorte que ledit guide optique (4) comprend une région enterrée du substrat (5) présentant une concentration en hydrogène comprise entre 10¹⁹ et 10²¹ cm⁻³.

6. Détecteur optique (1) selon l'une quelconque des revendications précédentes comprenant en outre une source (100) et un guide primaire (110) couplé à ladite source (100) et au guide optique (4), dans lequel les rayons lumineux (10) sont issus de ladite source (100) et guidés par le guide primaire (110) et injectés dans le guide optique (4) par un couplage critique entre le guide primaire (110) et le guide optique (4).

7. Détecteur optique (1) selon l'une quelconque des revendications précédentes comprenant en outre un miroir métallique (7) configuré pour empêcher des rayons lumineux (10) non diffusés par l'au moins une particule (20) et non collectés par le guide (4), d'accéder aux photodétecteurs (3).

8. Détecteur optique (1) selon la revendication précédente dans lequel le miroir métallique (7) est intercalé entre le guide optique (4) et la pluralité de photodétecteurs (3), en empilement selon une direction (z) transverse à une direction principale (x) de propagation des rayons lumineux (10) en sortie (61, 62) du guide optique (4).

9. Détecteur optique (1) selon la revendication précédente dans lequel le miroir métallique (7) présente un bord (71, 72) en saillie d'une entrée (51, 52) ou d'une sortie (61, 62) du guide optique (4), ledit bord (71, 72) étant séparé du centre du canal (2) par une distance dm inférieure à une distance dg séparant l'entrée (51, 52) ou la sortie (61, 62) du guide optique du centre du canal (2), de sorte que le guide optique (4) soit en retrait du miroir métallique (7) vis-à-vis du centre du canal (2).

10. Procédé de fabrication d'un détecteur (1) optique de particules comprenant :
- au moins un canal (2) destiné à accueillir un fluide transportant au moins une particule (20), et à être traversé par des rayons lumineux (10) de sorte que lesdits rayons lumineux (10) soient en partie diffusés par l'au moins une particule (20),
- une pluralité de photodétecteurs (3) aptes à recevoir lesdits rayons lumineux diffusés,
- au moins un guide optique (4) configuré pour :
- collecter des rayons lumineux (10) non diffusés par l'au moins une particule (20), et pour
- réinjecter lesdits rayons lumineux (10) non diffusés dans le canal (2),
ledit procédé de fabrication comprenant les étapes suivantes :
- fournir un substrat (5),
- former le guide optique (4) par implantation d'ions dans le substrat (5),
- former le canal (2) en perçant au moins le substrat (5) au niveau du guide optique (4), de manière à ce que ledit canal (2) traverse le guide optique (4), le guide optique (4) comprenant ainsi au moins une première partie (41) et une deuxième partie (42) séparées l'une de l'autre par le canal (2), la première partie (41) du guide (4) présentant une première entrée (51) et une première sortie (61) débouchant sur le canal (2) et la deuxième partie (42) du guide (4) présentant une deuxième entrée (52) et une deuxième sortie (62) débouchant sur le canal (2), lesdites première et deuxième parties (41, 42) étant agencées de manière à ce que la première entrée (51) soit en regard de la deuxième sortie (62), et la deuxième entrée (52) soit en regard de la première sortie (61),
- fournir une pluralité de photodétecteurs (3),
- assembler les photodétecteurs (3) de ladite pluralité avec le substrat (5), en disposant les photodétecteurs (3) au moins en partie autour du canal (2).

11. Procédé selon la revendication précédente dans lequel l'implantation d'ions est une implantation à base d'ions hydrogène H+.

12. Procédé selon l'une quelconque des revendications 10 à 11 dans lequel le substrat (5) est assemblé à la pluralité de photodétecteurs (3) par l'intermédiaire d'au moins une autre couche, ladite au moins une autre couche comprenant par exemple un support (90) transparent.

13. Procédé selon l'une quelconque des revendications 10 à 12 dans lequel au moins une partie du canal (2) est polie de façon à présenter une rugosité moyenne RMS inférieure à 2 nm.

14. Procédé selon l'une quelconque des revendications 10 à 13 comprenant en outre la formation d'un miroir (7) métallique sur une face (50) du substrat (5), ladite face (50) étant tournée en regard des photodétecteurs (3) lors de l'assemblage de sorte que le miroir (7) métallique soit disposé entre le guide optique (4) et la pluralité de photodétecteurs (3).

15. Procédé selon la revendication précédente dans lequel le miroir (7) métallique est au moins en partie formé par une couche d'or, et l'assemblage est effectué par thermocompression à partir de la couche d'or.

## Patentansprüche

1. Optischer Teilchendetektor (1), umfassend:
- mindestens einen Kanal (2), der dazu bestimmt ist, ein Fluid aufzunehmen, das mindestens ein Teilchen (20) transportiert, und von Lichtstrahlen (10) durchquert zu werden, so dass die Lichtstrahlen teilweise von dem mindestens einen Teilchen gestreut werden,
- eine Vielzahl von Fotodetektoren (3), die in der Lage sind, die gestreuten Lichtstrahlen zu empfangen,
wobei der Detektor (1) **dadurch gekennzeichnet ist, dass** er mindestens einen Lichtwellenleiter (4) umfasst, der mindestens einen ersten Teil (41) und einen zweiten Teil (42) umfasst, die durch den Kanal (2) voneinander getrennt sind, wobei der erste Teil (41) des Wellenleiters (4) einen ersten Eingang (51) und einen ersten Ausgang (61) aufweist, der in den Kanal (2) mündet, und der zweite Teil (42) des Wellenleiters (4) einen zweiten Eingang (52) und einen zweiten Ausgang (62) aufweist, der in den Kanal (2) mündet, wobei der erste und der zweite Teil (41, 42) so angeordnet sind, dass der erste Eingang (51) dem zweiten Ausgang (62) gegenüberliegt und der zweite Eingang (52) dem ersten Ausgang (61) gegenüberliegt, wobei der Lichtwellenleiter (4) konfiguriert ist zum:
- Sammeln von Lichtstrahlen, die nicht durch das mindestens eine Teilchen gestreut wurden und den Kanal durchquert haben, an mindestens einem Eingang des Wellenleiters aus dem ersten und dem zweiten Eingang (51, 52), und zum
- Zurückleiten der nicht gestreuten Lichtstrahlen in den Kanal durch mindestens einen Ausgang des Wellenleiters aus dem ersten und dem zweiten Ausgang (61, 62).

2. Optischer Detektor (1) nach dem vorhergehenden Anspruch, wobei der Lichtwellenleiter einen diskontinuierlichen gekrümmten Kreis (c) mit ovaler Form bildet, der von dem Kanal durchquert wird.

3. Optischer Detektor (1) nach einem der vorhergehenden Ansprüche, wobei der Lichtwellenleiter so konfiguriert ist, dass er nach jedem Durchgang der ungestreuten Lichtstrahlen durch den Kanal mindestens 90 % der ungestreuten Lichtstrahlen wieder in den Kanal zurückleitet.

4. Optischer Detektor (1) nach einem der vorhergehenden Ansprüche, wobei der Lichtwellenleiter von einem Substrat (5) umgeben ist und wobei der Lichtwellenleiter (4) einen Brechungsindex ng aufweist und das Substrat (5) einen Brechungsindex ns aufweist, so dass ng - ns = Δn und 0 < Δn ≤ 0,1.

5. Optischer Detektor (1) nach dem vorhergehenden Anspruch, wobei der Lichtwellenleiter (4) durch lonenimplantation von H+-Wasserstoffionen in das Substrat (5) gebildet wird, so dass der Lichtwellenleiter (4) einen vergrabenen Bereich des Substrats (5) mit einer Wasserstoffkonzentration zwischen 10¹⁹ und 10²¹ cm⁻³ aufweist.

6. Optischer Detektor (1) nach einem der vorhergehenden Ansprüche, der ferner eine Quelle (100) und einen Primärleiter (110), der mit der Quelle (100) und dem Lichtwellenleiter (4) gekoppelt ist, umfasst, wobei die Lichtstrahlen (10) von der Quelle (100) ausgegeben und durch den Primärleiter (110) geführt und in den Lichtwellenleiter (4) durch eine kritische Kopplung zwischen dem Primärleiter (110) und dem Lichtwellenleiter (4) geleitet werden.

7. Optischer Detektor (1) nach einem der vorhergehenden Ansprüche, der ferner einen Metallspiegel (7) umfasst, der so konfiguriert ist, dass er verhindert, dass Lichtstrahlen (10), die nicht durch das mindestens eine Teilchen (20) gestreut und nicht von dem Wellenleiter (4) gesammelt werden, zu den Fotodetektoren (3) gelangen.

8. Optischer Detektor (1) nach dem vorhergehenden Anspruch, wobei der Metallspiegel (7) zwischen dem Lichtwellenleiter (4) und der Vielzahl von Fotodetektoren (3) in einem Stapel in einer Richtung (z) quer zu einer Hauptausbreitungsrichtung (x) der Lichtstrahlen (10) am Ausgang (61, 62) des Lichtwellenleiters (4) eingefügt ist.

9. Optischer Detektor (1) nach dem vorhergehenden Anspruch, wobei der Metallspiegel (7) eine Kante (71, 72) aufweist, die von einem Eingang (51, 52) oder einem Ausgang (61, 62) des Lichtwellenleiters (4) vorsteht, wobei die Kante (71, 72) von der Mitte des Kanals (2) um einen Abstand dm getrennt ist, der kleiner ist als der Abstand dg, der den Eingang (51, 52) oder den Ausgang (61, 62) des Lichtwellenleiters von der Mitte des Kanals (2) trennt, so dass der Lichtwellenleiter (4) von dem Metallspiegel (7) relativ zur Mitte des Kanals (2) zurückgesetzt ist.

10. Verfahren zum Herstellen eines optischen Teilchendetektors (1), umfassend:
- mindestens einen Kanal (2), der dazu bestimmt ist, ein Fluid aufzunehmen, das mindestens ein Teilchen (20) transportiert, und von Lichtstrahlen (10) durchquert zu werden, so dass die Lichtstrahlen (10) teilweise von dem mindestens einen Teilchen (20) gestreut werden,
- eine Vielzahl von Fotodetektoren (3), die in der Lage sind, die gestreuten Lichtstrahlen zu empfangen,
- mindestens einen Lichtwellenleiter (4), der konfiguriert ist zum:
- Sammeln von Lichtstrahlen (10), die nicht durch das mindestens eine Partikel (20) gestreut wurden, und zum
- Zurückleiten der nicht gestreuten Lichtstrahlen (10) in den Kanal (2),
wobei das Herstellungsverfahren die folgenden Schritte umfasst:
- Bereitstellen eines Substrats (5),
- Bilden des Lichtwellenleiters (4) durch Implantation von Ionen in das Substrat (5),
- Bilden des Kanals (2), indem mindestens in das Substrat (5) auf Höhe des Lichtwellenleiters (4) gebohrt wird, so dass der Kanal (2) den Lichtwellenleiter (4) durchquert, wobei der Lichtwellenleiter (4) somit mindestens einen ersten Teil (41) und einen zweiten Teil (42) umfasst, die durch den Kanal (2) voneinander getrennt sind, wobei der erste Teil (41) des Wellenleiters (4) einen ersten Eingang (51) und einen ersten Ausgang (61) aufweist, der in den Kanal (2) mündet, und der zweite Teil (42) des Wellenleiters (4) einen zweiten Eingang (52) und einen zweiten Ausgang (62) aufweist, der in den Kanal (2) mündet, wobei der erste und der zweite Teil (41, 42) so angeordnet sind, dass der erste Eingang (51) dem zweiten Ausgang (62) gegenüberliegt und der zweite Eingang (52) dem ersten Ausgang (61) gegenüberliegt,
- Bereitstellen einer Vielzahl von Fotodetektoren (3),
- Zusammenfügen der Fotodetektoren (3) der Vielzahl mit dem Substrat (5), indem die Fotodetektoren (3) mindestens teilweise um den Kanal (2) herum angeordnet werden.

11. Verfahren nach dem vorhergehenden Anspruch, wobei die lonenimplantation eine Implantation auf Basis von H+-Wasserstoffionen ist.

12. Verfahren nach einem der Ansprüche 10 bis 11, wobei das Substrat (5) über mindestens eine weitere Schicht mit der Vielzahl von Fotodetektoren (3) zusammengefügt wird, wobei die mindestens eine weitere Schicht beispielsweise einen transparenten Träger (90) umfasst.

13. Verfahren nach einem der Ansprüche 10 bis 12, wobei mindestens ein Teil des Kanals (2) so poliert wird, dass er eine durchschnittliche Rauheit RMS von weniger als 2 nm aufweist.

14. Verfahren nach einem der Ansprüche 10 bis 13, das ferner das Bilden eines Metallspiegels (7) auf einer Fläche (50) des Substrats (5) umfasst, wobei die Fläche (50) so gedreht wird, dass sie beim Zusammenfügen den Fotodetektoren (3) zugewandt ist, dass der Metallspiegel (7) zwischen dem Lichtwellenleiter (4) und der Vielzahl von Fotodetektoren (3) angeordnet ist.

15. Verfahren nach dem vorhergehenden Anspruch, wobei der Metallspiegel (7) mindestens teilweise aus einer Goldschicht gebildet wird und das Zusammenfügen durch Thermokompression-Bonden von der Goldschicht aus durchgeführt wird.

## Claims

1. An optical particle sensor (1) comprising:
- at least one channel (2) intended to accommodate a fluid transporting at least one particle (20), and to be crossed by light rays (10) such that said light rays are partially scattered by the at least one particle,
- a plurality of photosensors (3) capable of receiving said scattered light rays,
said detector (1) being **characterised in that** it comprises at least one optical guide (4) comprising at least one first portion (41) and one second portion (42) which are separated from each other by the channel (2), the first portion (41) of the guide (4) having a first inlet (51) and a first outlet (61) opening onto the channel (2) and the second portion (42) of the guide (4) having a second inlet (52) and a second outlet (62) opening onto the channel (2), said first and second portions (41, 42) being arranged so that the first inlet (51) is opposite to the second outlet (62), and the second inlet (52) is opposite to the first outlet (61), the optical guide (4) being configured to:
- collect, at least one inlet of the guide from the first and second inlets (51, 52), light rays which are not scattered by the at least one particle and having crossed the channel, and to
- reinject, via at least one outlet of the guide from the first and second outlets (61, 62), said unscattered light rays into the channel.

2. The optical sensor (1) according to the preceding claim, wherein the optical guide forms a discontinuous curved circuit (c) having an oval shape and crossed by the channel.

3. The optical sensor (1) according to any one of the preceding claims, wherein the optical guide is configured to reinject at least 90% of the unscattered light rays into the channel, after each crossing of said unscattered light rays in the channel.

4. The optical sensor (1) according to any one of the preceding claims, wherein the optical guide is surrounded by a substrate (5), and wherein the optical guide (4) has a refractive index ng and the substrate (5) has a refractive index ns such that ng - ns = Δn and 0 < Δn ≤ 0.1.

5. The optical sensor (1) according to the preceding claim wherein the optical guide (4) is formed by ion implantation of hydrogen ions H+ in the substrate (5), such that said optical guide (4) comprises a buried region of the substrate (5) having a hydrogen concentration comprised between 10¹⁹ and 10²¹ cm⁻³.

6. The optical sensor (1) according to any one of the preceding claims, further comprising a source (100) and a primary guide (110) coupled to said source (100) and to the optical guide (4), wherein the light rays (10) originate from said source (100) and guided by the primary guide (110) and injected into the optical guide (4) by a critical coupling between the primary guide (110) and the optical guide (4).

7. The optical sensor (1) according to any one of the preceding claims, further comprising a metal mirror (7) configured to prevent light rays (10), which are not scattered by the at least one particle (20) and not collected by the guide (4), from accessing the photosensors (3).

8. The optical sensor (1) according to the preceding claim, wherein the metal mirror (7) is interposed between the optical guide (4) and the plurality of photosensors (3), in a stacked configuration in a direction (z) transverse to a main direction (x) of propagation of the light rays (10) at the outlet (61, 62) of the optical guide (4).

9. The optical sensor (1) according to the preceding claim, wherein the metal mirror (7) has an edge (71, 72) protruding from an inlet (51, 52) or an outlet (61, 62) of the optical guide (4), said edge (71, 72) being separated from the centre of the channel (2) by a distance dm less than a distance dg separating the inlet (51, 52) or the outlet (61, 62) of the optical guide from the centre of the channel (2), such that the optical guide (4) is recessed from the metal mirror (7) vis-à-vis the centre of the channel (2).

10. A method for manufacturing an optical particle sensor (1) comprising:
- at least one channel (2) intended to accommodate a fluid transporting at least one particle (20), and to be crossed by light rays (10) such that said light rays are partially scattered by the at least one particle (20),
- a plurality of photosensors (3) capable of receiving said scattered light rays,
- at least one optical guide (4) configured to:
- collect light rays (10) which are not scattered by the at least one particle (20), and to
- reinject said unscattered light rays (10) into the channel (2),
said manufacturing method comprising the following steps:
- providing a substrate (5),
- forming the optical guide (4) by ion implantation in the substrate (5),
- forming the channel (2) by drilling at least the substrate (5) at the optical guide (4), so that said channel (2) crosses the optical guide (4), the optical guide (4) thus comprising at least one first portion (41) and one second portion (42) which are separated from each other by the channel (2), the first portion (41) of the guide (4) having a first inlet (51) and a first outlet (61) opening onto the channel (2) and the second portion (42) of the guide (4) having a second inlet (52) and a second outlet (62) opening onto the channel (2), said first and second portions (41, 42) being arranged so that the first inlet (51) is opposite to the second outlet (62), and the second inlet (52) is opposite to the first outlet (61),
- providing a plurality of photosensors (3),
- assembling the photosensors (3) of said plurality with the substrate (5), by disposing the photosensors (3) at least partially around the channel (2).

11. The method according to the preceding claim, wherein the ion implantation is an implantation based on hydrogen ions H+.

12. The method according to any one of claims 10 to 11, wherein the substrate (5) is assembled to the plurality of photosensors (3) via at least one other layer, said at least one other layer comprising for example a transparent support (90).

13. The method according to any one of claims 10 to 12, wherein at least one portion of the channel (2) is polished so as to have a mean roughness RMS which is less than 2 nm.

14. The method according to any one of claims 10 to 13, further comprising the formation of a metal mirror (7) on one face (50) of the substrate (5), said face (50) being turned opposite to the photosensors (3) during assembly such that the metal mirror (7) is disposed between the optical guide (4) and the plurality of photosensors (3).

15. The method according to the preceding claim, wherein the metal mirror (7) is at least partially formed by a gold layer, and the assembly is performed by thermocompression from the gold layer.
